# EUROPEAN PATENT SPECIFICATION

(11) **EP 1 283 512 B1**
(45) Date of publication and mention of the grant of the patent: **12.03.2008**
(21) Application number: 01830531.8
(22) Date of filing: 08.08.2001
(51) Int. Cl.: G09F 7/16

(54) **Graphic representation sign**
Graphische Anzeigevorrichtung
Appareil d'affichage graphique

(43) Date of publication of application: 12.02.2003
(73) Proprietor: Happy Vision S.r.l. A Socio Unico, 24020 Torre Boldone (BG) (IT)
(72) Inventor: Zonca,Federico, 24020 Torre Boldone (BG) (IT)
(74) Representative: Garavelli, Paolo

(56) References cited:
- US-A- 5 779 919
- US-A- 6 165 561
- PATENT ABSTRACTS OF JAPAN vol. 009, no. 179 (M-399), 24 July 1985 (1985-07-24) -& JP 60 048394 A (REJIN KOGYO KK), 16 March 1985 (1985-03-16)
- PATENT ABSTRACTS OF JAPAN vol. 1997, no. 09, 30 September 1997 (1997-09-30) -& JP 09 118990 A (CORONA KOGYO KK), 6 May 1997 (1997-05-06)
- PATENT ABSTRACTS OF JAPAN vol. 1996, no. 11, 29 November 1996 (1996-11-29) -& JP 08 185124 A (MARUMI SANGYO:KK), 16 July 1996 (1996-07-16)
- PATENT ABSTRACTS OF JAPAN vol. 2000, no. 07, 29 September 2000 (2000-09-29) -& JP 2000 112340 A (NANIWA STAINLESS KOGYO KK;SDI:KK), 21 April 2000 (2000-04-21)
- PATENT ABSTRACTS OF JAPAN vol. 1998, no. 11, 30 September 1998 (1998-09-30) -& JP 10 161523 A (DIA PLATE:KK), 19 June 1998 (1998-06-19)
- PATENT ABSTRACTS OF JAPAN vol. 1999, no. 01, 29 January 1999 (1999-01-29) -& JP 10 274929 A (SAKAI SILK SCREEN:KK), 13 October 1998 (1998-10-13)

## Description

The present document describes a coloring process for a sign for the representation of open and/or closed spaces, of the territory, of figures and images, of indications in the form of a notice, ensign, plate and map, for public and private use.

A notice, written or printed on various materials, an advertising sign, an indicator sign, a map, a plate placed on shops or public offices, a small plate with escutcheon, are expressions represented by an indicator sign for public and indoor use, for example plans of firm or school evacuation.

A map, realised on a metallic or plastic material or the like, is placed in a point specifically oriented with respect to the represented place, and allows the user to remake the surrounding environment described by the map.

Instead, in the case of a commercial sign applied for example on a shop, or on a plate of a professional office placed in the hall of a residential palace, users get information therefrom such as: building dislocation, business hours, business name, owners' names.

The conventional or artistic signs are coloured in contrast with respect to the background, which is the slab composing the sign. The realisation of these signs in high- or bas-relief, together with the chromatic contrast as above, favours information decoding by the users that, in addition, in the specific case of the maps, are able to mentally remake the environment of which the map is a symbolic representation.

In others words, the decoding process by the users occurs in visual or tactile manner or according to coupling variations of the two forms of expression.

The graphic representation signs of the above-described type have as a common denominator the contrast of colours and the physical relief of the signs represented therein. In this case, a "map" indicator sign has to be oriented with regard to the intrinsic environment and allows representing with conventional signs obstacles, fittings, environments, routes, exits, halls, services, doors, walls, etc. according to a plan view. Writings are copied out in alphanumeric and/or Braille characters.

The representation by the indicator sign is rendered optimal with respect to "Universal Design" standards: visual contrast of alphanumeric and graphic representation characters with respect to sign background; alphanumeric characters height; geometric signs height combined with the representation of obstacles, walls, doors, fittings, etc, of immediate individuation and simple decoding; dimension of Braille characters and pin roughness and bevel characteristics, these latter ones being of the adequate cylindrical or frustum-of-cone shape and adequate edge bevel.

A graphic representation sign exposed to atmospheric agents besides has to be able to keep unchanged in time the physical characteristics of materials, and moreover has to keep unchanged the contrast of colours subjected to sun light, and of roughness as regards the area subjected to tactile reading against the formation of fungous projections, etc.

JP-A-60048399 discloses a process comprising photoengraving of a substrate and vacuum molding of a synthetic resin. This substrate and this synthetic resin are closely adhered. The stability problem of this substrate compared with the dimensions of the tactile display is not taken into account.

JP-A-09118990 discloses a process regarding projecting parts obtained by a double etching method dissolving the circumferences of projecting parts. The stability problem of the substrate compared with the dimensions of the tactile display is not taken into account.

JP-A-08185124 considers the problem of structural stability of a touch guide board realising boundaries and staircases with projecting shapes obtained by etching. An additional printing process defines the picture characters realised with ordinary ink and braille of ink having transparency in defined area.

JP-A-2000112340 discloses a manufacturing process including etching of metallic board to form a cylindrical projection; electrolytic polishing and buffing or buffing alone to form the cylindrical projection into a spherical shape; grinding, colouring or plating.

JP-A-10161523 discloses a braille board formed by a painting process for spaying spray liquid onto a stainless board; moreover, a fixing process for fixing the spay liquid is adopted.

US-A-5779919A discloses a porcelain coated sign comprises a steel plate reverse etched to form raised indicia against an etched background area.

JP-A-10274929 discloses particulates of titanium oxide stuck and fixed on the surface of a glaze layer.

US-A-6 165 561 discloses a colour enamelling process in the field of cars painting.

Object of the invention treated in this document is realising a coloring process for a graphic representation sign that complies with optimum representation standards of signs of artistic type and, in particular, of conventional type, these latter ones to be used in indicator signs by public and indoor users. This sign is realised by means of engraving techniques, that is by means of a production process that allows reproducing both the above signs and the possible edge elements of the sign itself.

Further objects of the invention are: obtaining a sign of homogeneous structure, that is composed of mutually similar and uniform elements or uniformly connected elements that give an harmonic aspect to the final product; realising a versatile sign of overall size and of marks reproduced in it; finally getting a graphic representation sign in which the surface roughness characteristics are associated with a pleasant tactile sensation and constitute a practical element for the elimination of artificial interventions such as: scratches, drawings or wall graffiti executed by spray paint.

With specific reference to writings in Braille characters, the colored sign allows rebuilding the pins composing the alphanumeric characters of said writing, complying with the standards of parallelism and distances, optimising the relationship between full and empty spaces.

These and other objects and advantages of the invention, as will appear evident from the following description, are obtained by coloring process for a sign as claimed in the independent Claims.

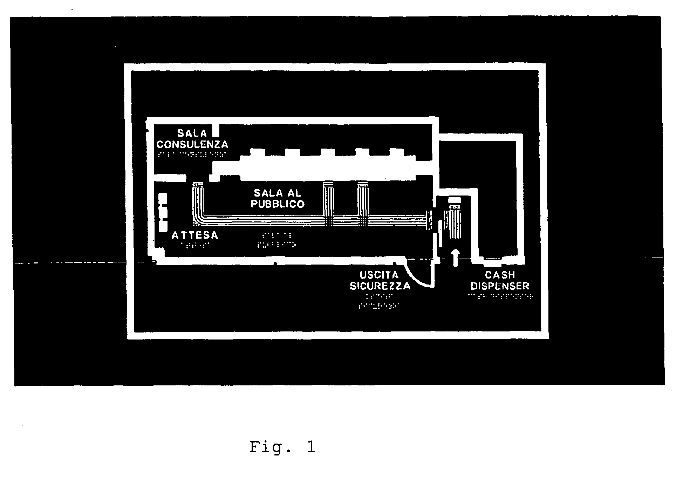

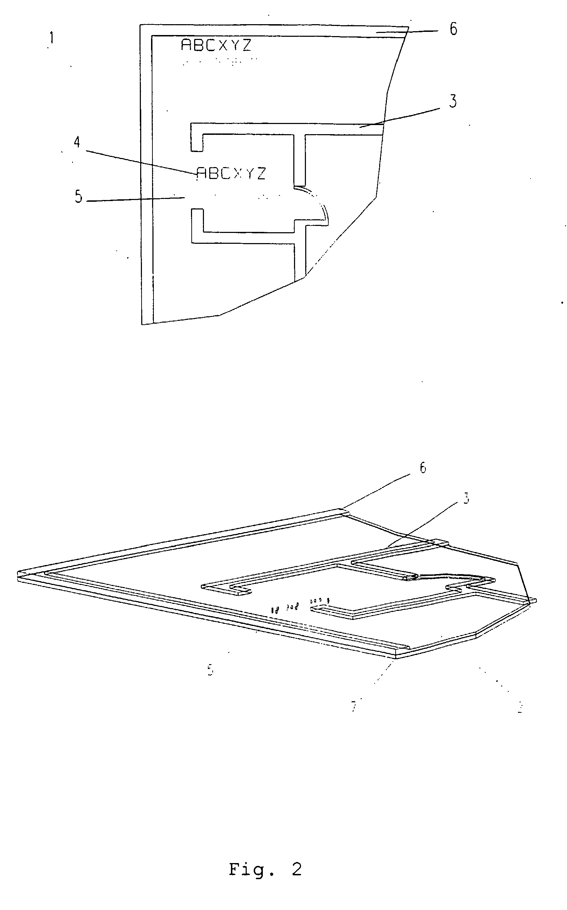

A graphic representation sign object of the present document is described in detail with specific reference to figures 1 and 2 that show a plan view and a detail of the axonometric view of a notice sign, respectively.

A notice sign 1 is composed by a single slab 2 that has in relief the grahpic 3, alphanumeric 4 and Braille characters 5 representation marks, in addition to the surface edge marks 6. The thickness with which it is possible to realise said signs can be different and functional to an effective reading of the Braille writing.

By way of example the following is mentioned: the thickness of the relief equal to 1 mm obtained starting from a pure slab, 3-mm thick; the graphic sign associated with walls and doors are included in relief with a width that can be defined depending on the presentation clarity; Braille characters are preferably of the 6-point type; texts are always included in relief.

The notice sign shows the relief signs in a colour contrasting the background colour, satisfying in this way a requirement which is at the basis of the visual comprehension of the notice sign.

The back of slab 2 is flat and shows a valid support for the application of a possible stiffening and support base 7; it is moreover functional for a possible interface for the fixing of the notice sign to the wall, to a column, etc. Given the slab 2 back planarity, it is possible to use adhesive 8 inserted between said slab and the support base 7. Alternatively, it is possible to provide for the insertion of subsequently polished rivets up to the slab plane.

From the constructive point of view, the described notice sign is obtained by an engraving method. Starting from a plan drawing of all the elements composing the sign - marks 3, 4, 5 and edge 6 - the engraving operation follows, which is carried out by mechanical and chemical actions according to known techniques. The warning sign realisation process comprises the following steps:
- drawing the set of elements composing the plan representation of the slab;
- reprinting on paper (this step being present only in case of traditional drawing execution);
- reprinting on photographic film (in case of photoengraving working);
- engraving working (working center with tool, photoengraving);
- surface finishing of slab 2;
- preparing the base slab 7;
- sticking the slabs 2 and 7 through adhesive 8, or joining the slabs 2 and 7 through riveting;
- colouring;
- surface protecting.

The use of a computerised drawing allows immediately transmitting the drawing measure to the engraving working center. Among the most widely used techniques, there are: engraving through chip removal with a tool; photoengraving.

The material composing the slab 2 that is best useful for the engraving technique is (anodized) aluminium, magnesium, magnesium alloy containing at least 70% of magnesium.

Engraving through chip removal brings about the use of working centers equipped with a tool with adequate sizes in order to faithfully reproduce inside angles of signs symbolising obstacles, walls, etc.

Engraving according to this photographic technique is best used for a reproduction of signs in addition to a production efficiency. An engraving time ratio is in fact computed according to the two methods that is about 5:1 in favour of the photoengraving technique.

Both methods anyway allow realising in a single step the creation of all graphic elements composing the plan view of a notice sign or the alphanumeric writing or marks composing plates or signs.

Downstream of the engraving step, regarding the coloring process of the invention, the slab 2 of the warning sign 1 is subjected to surface cleaning both for relief characters and for slab bottom. In such a way the surface roughness degree is modified, favouring the coloured enamel/paint/ink adhesion. It is possible to replace the aggressive cleaning bath by applying a primer on the whole slab 2 surface in order to make the final enamel adhesion easier.

The final enamel, with different colours to distinguish marks 3, 4 and 5 with respect to slab 2 bottom, is a vetrous mass with different components, generally opaque, that is laid at the end of the finishing process.

The application of protecting enamel/paint is further provided againt scratches, drawings and wall graffiti performed with spray paint.

The structural homogeneity of slab 2 including marks 4, 5 and 6 as a whole solves the purpose of easily treating the slab 2 itself by immersing it in baths based on aggressive substances and monitoring the bath aggression degree of depth. A final product is obtained whose surface transmits a pleasant tactile sensation, in addition to solving the objective of efficiently transmitting visual and tactile sensations.

The application of enamel/paint/ink is performed on the surface through compressed air guns according to the technique used for painting the car. Another painting system is the typography press system, comprising the passage of a roller made of rubber or other material drenched with paint on the slab 2 surface.

Some specific painting procedures have been set up that are able to return a finished surface with the highest physical-mechanical characteristics. These procedures have alternate paint application steps and exposure steps to heat sources with oven or ultraviolet rays. The enclosed table contains the painting and heating sequences of three specific methods.

| | METHOD 1 | METHOD 2 | METHOD 3 |
|---|---|---|---|
| 1 | Primer | Primer | Primer |
| 2 | Oven | Oven | Oven |
| 3 | Enamel/gun paint | Enamel/gun paint | Enamel/gun paint |
| 4 | Oven | Oven | Oven |
| 5 | Enamel/gun paint | Ink with press | Ink with roller |
| 6 | Oven | UV exposure | UV exposure |
| 7 | Cleaning | Opaque paint | Opaque paint |
| 8 | Transparent paint (applied in certain zones) | UV exposure | UV exposure |
| 9 | | Oven | Oven |
| 10 | Spray or syringe coloring | Anti-scratch paint | Anti-scratch paint |
| 11 | Oven | | |
| 12 | Opaque transparent paint | | |
| 13 | Oven | | |
| 14 | Anti-scratch paint | | |

## Claims

1. Coloring process of a graphic representation sign (1) in the form of a notice, ensign, plate or map, for public and indoor use, composed of a slab (2) that contains in relief graphic (3), alphanumeric (4) and Braille characters (5) representation marks, in addition to surface edge marks (6), said sign (1) being realised in an homogeneous structure, such homogeneous structure being obtained by means of an engraving technique, an engraving operation being carried out by a chemical photoengraving action or by a mechanical chip-removing action, said homogeneous structure being composed of a single slab (2), said production process reproducing from said single slab (2) all graphic elements marks (3, 4, 5, 6), said colouring process comprising the steps of:
- applying a primer to said sign (1);
- firstly baking said sign (1) in an oven;
- gun-painting said sign(1) with an enamel;
- applying an anti-scratch paint to said sign (1);
**characterised in that** said colouring process further comprises, after the step of firstly gun-painting said sign (1) with an enamel, the steps of:
- secondly baking said sign (1) in an oven;
- secondly gun-painting said sign(1) with an enamel;
- thirdly baking said sign (1) in an oven;
- cleaning said sign (1);
- applying transparent paint to certain zones of said sign (1);
- spray- or syringe-coloring said sign (1);
- fourthly baking said sign (1) in an oven;
- applying transparent opaque paint to said sign (1); and
- fifthly baking said sign (1) in an oven.

2. Coloring process of a graphic representation sign (1) in the form of a notice, ensign, plate or map, for public and indoor use, composed of a slab (2) that contains in relief graphic (3), alphanumeric (4) and Braille characters (5) representation marks, in addition to surface edge marks (6), said sign (1) being realised in an homogeneous structure, such homogeneous structure being obtained by means of an engraving technique, an engraving operation being carried out by a chemical photoengraving action or by a mechanical chip-removing action, said homogeneous structure being composed of a single slab (2), said production process reproducing from said single slab (2) all graphic elements marks (3, 4, 5, 6), said colouring process comprising the steps of:
- applying a primer to said sign (1);
- firstly baking said sign (1) in an oven;
- gun-painting said sign(1) with an enamel;
- applying an anti-scratch paint to said sign (1) ;
**characterised in that** said colouring process further comprises, after the step of firstly gun-painting said sign (1) with an enamel, the steps of:
- secondly baking said sign (1) in an oven;
- applying ink with a press to said sign (1);
- exposing said sign (1) to Ultra Violet, UV, rays;
- applying an opaque paint to said sign (1);
- exposing said sign (1) to Ultra Violet, UV, rays; and
- thirdly baking said sign (1) in an oven.

3. Coloring process of a graphic representation sign (1) in the form of a notice, ensign, plate or map, for public and indoor use, composed of a slab (2) that contains in relief graphic (3), alphanumeric (4) and Braille characters (5) representation marks, in addition to surface edge marks (6), said sign (1) being realised in an homogeneous structure, such homogeneous structure being obtained by means of an engraving technique, an engraving operation being carried out by a chemical photoengraving action or by a mechanical chip-removing action, said homogeneous structure being composed of a single slab (2), said production process reproducing from said single slab (2) all graphic elements marks (3, 4, 5, 6), said colouring process comprising the steps of:
- applying a primer to said sign (1);
- firstly baking said sign (1) in an oven;
- gun-painting said sign(1) with an enamel;
- applying an anti-scratch paint to said sign (1) ;
**characterised in that** said colouring process further comprises, after the step of firstly gun-painting said sign (1) with an enamel, the steps of:
- secondly baking said sign (1) in an oven;
- applying ink with a roller to said sign (1);
- exposing said sign (1) to Ultra Violet, UV, rays;
- applying an opaque paint to said sign (1);
- exposing said sign (1) to Ultra Violet, UV, rays; and
- thirdly baking said sign (1) in an oven.

## Patentansprüche

1. Färbungsprozess eines Schildes für die graphische Darstellung (1) in Form von Hinweisen, Zeichen, Schildern zur öffentlichen und internen Verwendung, das aus einer Platte (2) besteht, die im Relief graphische (3), alphanumerische (4) Darstellungszeichen und Braillebuchstaben (5) sowie Randzeichen der Oberfläche (6) enthält, das genannte Schild (1) ist aus einer gleichförmigen Struktur hergestellt, diese Struktur wird durch eine Gravurtechnik erhalten, diese Gravur wird durch die chemische Wirkung einer Photogravur oder durch die mechanische Wirkung einer Spanabhebung erzeugt, die gleichförmige Struktur besteht aus einer einzelnen Platte (2), der genannte Herstellungsprozess reproduziert aus der genannten einzelnen Platte (2) alle Zeichen graphischer Elemente (3, 4, 5, 6), der genannte Färbungsprozess enthält Phasen wie:
- Auftragung eines Grundanstrichs am genannten Schild (1);
- Erstes Einbrennen des genannten Schildes (1) in einem Ofen;
- Spritzlackierung des genannten Schildes (1) mit einer Glasur;
- Auftragung eines Graffitischutzes am genannten Schild (1);
und ist **dadurch gekennzeichnet, dass** der Färbungsprozess außerdem nach der Spritzlackierungsphase des genannten Schildes (1) mit einer Glasur folgende Phasen enthält:
- Zweites Einbrennen des genannten Schildes (1) in einem Ofen;
- Zweite Spritzlackierung des genannten Schildes (1) mit einer Glasur;
- Drittes Einbrennen des genannten Schildes (1) in einem Ofen;
- Reinigung des genannten Schildes (1);
- Auftragen von Transparentlack in gewissen Bereichen des genannten Schildes (1);
- Färbung des genannten Schildes (1) durch Aufspritzen oder mit Spritzen;
- Viertes Einbrennen des genannten Schildes (1) in einem Ofen;
- Auftragen von Matttransparentlack am genannten Schild (1); und
- Fünftes Einbrennen des genannten Schildes (1) in einem Ofen.

2. Färbungsprozess eines Schildes für die graphische Darstellung (1) in Form von Hinweisen, Zeichen, Schildern zur öffentlichen und internen Verwendung, das aus einer Platte (2) besteht, die im Relief graphische (3), alphanumerische (4) Darstellungszeichen und Braillebuchstaben (5) sowie Randzeichen der Oberfläche (6) enthält, das genannte Schild (1) ist aus einer gleichförmigen Struktur hergestellt, diese Struktur wird durch eine Gravurtechnik erhalten, diese Gravur wird durch die chemische Wirkung einer Photogravur oder durch die mechanische Wirkung einer Spanabhebung erzeugt, die gleichförmige Struktur besteht aus einer einzelnen Platte (2), der genannte Herstellungsprozess reproduziert aus der genannten einzelnen Platte (2) alle Zeichen graphischer Elemente (3, 4, 5, 6), der genannte Färbungsprozess enthält Phasen wie:
- Auftragung eines Grundanstrichs am genannten Schild (1);
- Erstes Einbrennen des genannten Schildes (1) in einem Ofen;
- Spritzlackierung des genannten Schildes (1) mit einer Glasur;
- Auftragung eines Graffitischutzes am genannten Schild (1);
und ist **dadurch gekennzeichnet, dass** der Färbungsprozess außerdem nach der Spritzlackierungsphase des genannten Schildes (1) mit einer Glasur folgende Phasen enthält:
- Zweites Einbrennen des genannten Schildes (1) in einem Ofen;
- Auftragung von Druckfarbe mit einer Presse am genannten Schild (1);
- Exposition des genannten Schildes (1) zu ultravioletten Strahlen, UV;
- Auftragung eines Mattlacks am genannten Schild (1);
- Exposition des genannten Schildes (1) zu ultravioletten Strahlen, UV; und
- Drittes Einbrennen des genannten Schildes (1) in einem Ofen.

3. Färbungsprozess eines Schildes für die graphische Darstellung (1) in Form von Hinweisen, Zeichen, Schildern zur öffentlichen und internen Verwendung, das aus einer Platte (2) besteht, die im Relief graphische (3), alphanumerische (4) Darstellungszeichen und Braillebuchstaben (5) sowie Randzeichen der Oberfläche (6) enthält, das genannte Schild (1) ist aus einer gleichförmigen Struktur hergestellt, diese Struktur wird durch eine Gravurtechnik erhalten, diese Gravur wird durch die chemische Wirkung einer Photogravur oder durch die mechanische Wirkung einer Spanabhebung erzeugt, die gleichförmige Struktur besteht aus einer einzelnen Platte (2), der genannte Herstellungsprozess reproduziert aus der genannten einzelnen Platte (2) alle Zeichen graphischer Elemente (3, 4, 5, 6), der genannte Färbungsprozess enthält Phasen wie:
- Auftragung eines Grundanstrichs am genannten Schild (1);
- Erstes Einbrennen des genannten Schildes (1) in einem Ofen;
- Spritzlackierung des genannten Schildes (1) mit einer Glasur;
- Auftragung eines Graffitischutzes am genannten Schild (1);
und ist **dadurch gekennzeichnet, dass** der Färbungsprozess außerdem nach der Spritzlackierungsphase des genannten Schildes (1) mit einer Glasur folgende Phasen enthält:
- Zweites Einbrennen des genannten Schildes (1) in einem Ofen;
- Auftragung von Druckfarbe mit einer Walze am genannten Schild (1);
- Exposition des genannten Schildes (1) zu ultravioletten Strahlen, UV;
- Auftragung eines Mattlacks am genannten Schild (1);
- Exposition des genannten Schildes (1) zu ultravioletten Strahlen, UV; und
- Drittes Einbrennen des genannten Schildes (1) in einem Ofen.

## Revendications

1. Processus de coloration d'un panneau pour la représentation graphique (1) sous forme d'avis, d'enseigne, de plaque et de plan, à usage public et privé, constitué d'une plaque (2) reportant en relief les signes de représentation graphique (3), alphanumérique (4) et les caractères Braille (5), ainsi que les signes de bordure de la surface (6), ledit panneau (1) étant réalisé avec une structure homogène, ladite structure homogène étant obtenue par le biais d'une technique de gravure, une opération de gravure étant exécutée par action chimique, par photogravure ou par action mécanique avec enlèvement de copeau, ladite structure homogène étant composée d'une seule plaque (2) et ledit processus de production reproduisant sur ladite seule plaque (2) tous les signes d'éléments graphiques (3, 4, 5, 6) ; ledit processus de coloration comprenant les étapes suivantes:
- application d'une couche de fond audit panneau (1);
- soumission dudit panneau (1) à une première cuisson au four;
- laquage dudit panneau (1) avec peinture au pistolet;
- application d'une peinture anti-graffitis audit panneau (1);
**caractérisé en ce que** ledit processus de coloration comprend encore, après l'opération de laquage dudit panneau (1) au pistolet, les phases suivantes:
- soumission dudit panneau (1) à une seconde cuisson au four;
- deuxième laquage dudit panneau (1) avec peinture au pistolet;
- soumission dudit panneau (1) à une troisième cuisson au four;
- nettoyage dudit panneau (1);
- application d'un vernis transparent sur certaines zones dudit panneau (1);
- coloration dudit panneau (1) au pistolet ou avec une seringue;
- soumission dudit panneau (1) à une quatrième cuisson au four;
- application d'un vernis opaque transparent audit panneau (1); et
- soumission dudit panneau (1) à une cinquième cuisson au four.

2. Processus de coloration d'un panneau pour la représentation graphique (1) sous forme d'avis, d'enseigne, de plaque et de plan, à usage public et privé, constitué d'une plaque (2) reportant en relief les signes de représentation graphique (3), alphanumérique (4) et les caractères Braille (5), ainsi que les signes de bordure de la surface (6), ledit panneau (1) étant réalisé avec une structure homogène, ladite structure homogène étant obtenue par le biais d'une technique de gravure, une opération de gravure étant exécutée par action chimique, par photogravure ou par action mécanique avec enlèvement de copeau, ladite structure homogène étant composée d'une seule plaque (2), ledit processus de production reproduisant sur ladite seule plaque (2) tous les signes d'éléments graphiques (3, 4, 5, 6), ledit processus de coloration comprenant les étapes suivantes:
- application d'une couche de fond audit panneau (1);
- soumission dudit panneau (1) à une première cuisson au four;
- laquage dudit panneau (1) avec peinture au pistolet;
- application d'une peinture anti-graffitis audit panneau (1);
**caractérisé en ce que** ledit processus de coloration comprend encore, après l'opération de laquage dudit panneau (1) au pistolet, les phases suivantes:
- soumission dudit panneau (1) à une deuxième cuisson au four;
- application audit panneau (1) de l'encre avec une presse;
- exposition dudit panneau (1) aux rayons Ultra Violets, UV;
- application d'un vernis opaque audit panneau (1);
- exposition dudit panneau (1) aux rayons Ultra Violets, UV; et
- soumission dudit panneau (1) à une troisième cuisson au four.

3. Processus de coloration d'un panneau pour la représentation graphique (1) sous forme d'avis, d'enseigne, de plaque et de plan, à usage public et privé, constitué d'une plaque (2) qui reporte en relief les signes de représentation graphique (3), alphanumérique (4) et les caractères Braille (5), ainsi que les signes de bordure de la surface (6), ledit panneau (1) étant réalisé avec une structure homogène, ladite structure homogène étant obtenue par le biais d'une technique de gravure, une opération de gravure étant exécutée par action chimique, par photogravure ou par action mécanique avec enlèvement de copeau, ladite structure homogène étant composée d'une seule plaque (2), ledit processus de production reproduisant sur ladite seule plaque (2) tous les signes d'éléments graphiques (3, 4, 5, 6), ledit processus de coloration comprenant les étapes suivantes:
- application d'une couche de fond audit panneau (1);
- soumission dudit panneau (1) à une première cuisson au four;
- laquage dudit panneau (1) avec peinture au pistolet;
- application d'une peinture anti-graffitis audit panneau (1);
**caractérisé en ce que** ledit processus de coloration comprend encore, après l'opération de laquage dudit panneau (1) au pistolet, les phases suivantes:
- soumission dudit panneau (1) à une deuxième cuisson au four;
- application de l'encre au rouleau audit panneau (1);
- exposition dudit panneau (1) aux rayons Ultra Violets, UV;
- application d'un vernis opaque audit panneau (1);
- exposition dudit panneau (1) aux rayons Ultra Violets, UV; et
- soumission dudit panneau (1) à une troisième cuisson au four.
